# EUROPEAN PATENT SPECIFICATION

(11) **EP 4 530 156 B1**
(45) Date of publication and mention of the grant of the patent: **22.10.2025**
(21) Application number: 24203313.2
(22) Date of filing: 27.09.2024
(51) Int. Cl.: B62B 3/14, B62B 5/06

(54) **SHOPPING CART DOUBLE HANDLE SYSTEM**
DOPPELGRIFFSYSTEM FÜR EINKAUFSWAGEN
SYSTÈME À DOUBLE POIGNÉE POUR CHARIOT D'ACHAT

(30) Priority: 29.09.2023 US 202363541459 P; 24.09.2024 US 202418895121
(43) Date of publication of application: 02.04.2025
(73) Proprietor: The Ondrasik Family Trust Dated 11/3/1999, Commerce CA 90040 (US)
(72) Inventor: ONDRASIK, Jr., V. John, Granada Hills, 91344 (US); ONDRASIK IV, V. John, Westlake Village, 91362 (US)
(74) Representative: Mewburn Ellis LLP

(56) References cited:
- JP-A- 2020 045 046
- US-A1- 2020 223 466
- US-B2- 7 063 337
- US-B2- 8 733 765

## Description

### Related Application:

The present application claims priority to U.S. Provisional Patent Application Serial No. 63/541,459, of same title, filed September 29, 2023.

### Technical Field:

The present invention relates to shopping carts.

### Background of the Invention:

Standard shopping carts all have an upper back handle that spans across the back of the shopping cart. The shopper holds onto this handle as (s)he moves the cart through a store. Typically, this upper back handle forms one side of the child seat found in many shopping carts. Unfortunately, the height of this upper back handle is not adjustable. This is not ideal for shorter users during their shopping experience.

It would instead be desirable to provide a shopping cart with an additional lower handle to serve as another option for shoppers of shorter stature. Specifically, it would be desirable to provide a system where shoppers could grasp onto the shopping cart at whichever of the two locations they prefer. As will be shown, the present system provides such a solution.

US 2020/223466 A1 discloses a shopping cart with an upper basket, the upper basket comprising a child seat, and upper handles between which a widthwise elongate member extends to support the upper basket.

US 7 063 337 B2 discloses a child seat assembly for use in a shopping cart, the child seat assembly being secured to a hinged rear gate of a shopping cart, the hinged rear gate having at least one lower leg opening and an upper void region between the top of the shopping cart basket and the bottom of the seat.

JP 2020 045046 A discloses a shopping cart comprising left and right struts erected from a base frame, left and right children's handles provided on parts of the left and right struts and separated at an interval of 5 cm or more, and left and right customer's handles provided on parts of the left and right struts and separated at an interval of 40 cm or more.

US 8 733 765 B2 discloses an airport cart comprising a pair of vertical supports extending upwards from a horizontal portion of the cart frame and dual handles extending rearward in a space-apart manner from the vertical supports.

### Summary of the Invention:

The invention provides a double handle shopping cart system as defined in the appended claims.

In preferred aspects, the pair of lower rear handles are positioned at opposite sides of the shopping cart, being on opposite sides of the child's seat basket.

As will be shown, the pair of lower rear handles are preferably connected to each of the upper rear handles above and the child's seat basket. In addition, the pair of lower rear handles may be connected to side supporting members of the shopping cart frame.

In various preferred aspects, the pair of lower rear gripping handles have openings above and below such that a user can wrap their fingers around the pair of lower gripping handles. In addition, each of the upper and lower rear gripping handles may further comprise plastic gripping surfaces, and the lower rear handles may preferably have plastic gripping surfaces with flattened top edges.

As such, the re-engineered back portion of a child's seat basket now accommodates two handles on the left and right side of the cart. This design will allow taller shoppers to use the regular single cart handle grips positioned above, and shorter shoppers to use the lower handle grips positioned below.

### Brief Description of the Drawings:

Fig. 1 is a front perspective view of the present double handle shopping cart showing a user grasping a single upper handle.
Fig. 2 is a front perspective view of the present double handle shopping cart showing a user grasping a pair of lower handles.
Fig. 3 is a rear side perspective view corresponding to Fig. 2.
Fig. 4 is a rear elevation view showing the single upper rear gripping handle above and the pair of lower rear gripping handles below.
Fig. 5 is a rear perspective view of the left lower gripping handle.
Fig. 6 is a rear perspective view of the lower right gripping handle.

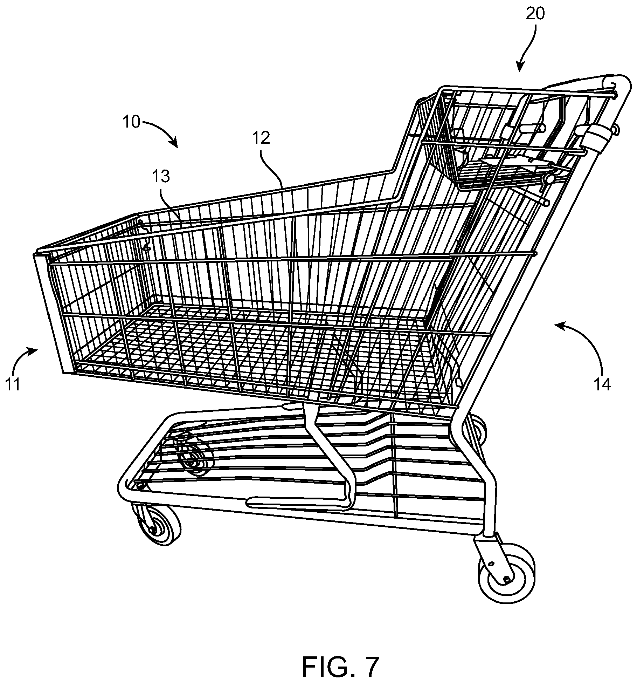

Fig. 7 is a side perspective view of a shopping cart with the present double handle system.

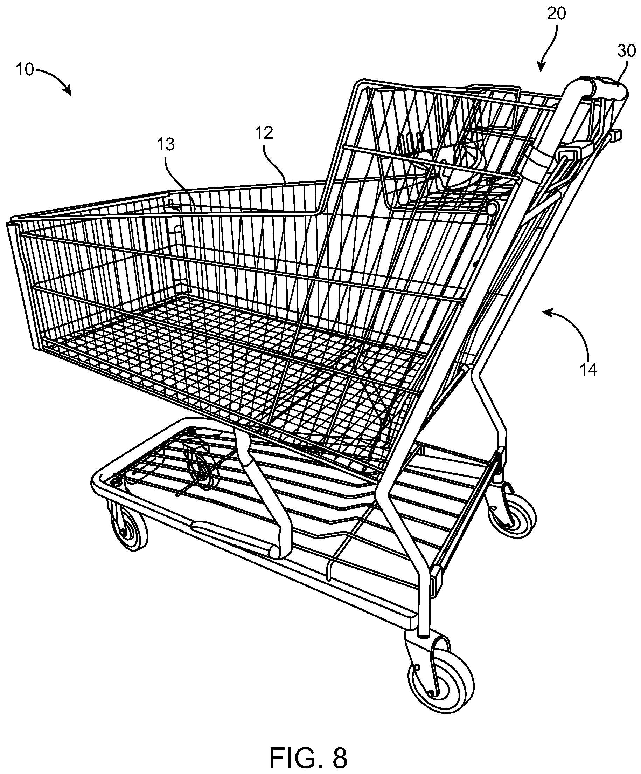

Fig. 8 is a side rear perspective view of the present double handle shopping cart.

### Detailed Description of the Drawings:

The attached Figures illustrate an exemplary shopping cart having a double handle system. Similar to many existing shopping carts, shopping cart 10 has a front wall 11; a left side wall 12; a right side wall 13; a rear wall 14; and a bottom or bottom wall 15. Also similar to existing shopping carts, shopping cart 10 has a child's seat basket 20. Child's seat basket 20 is formed between side walls 12 and 13, rear wall 14, a back wall 22, and a bottom or bottom wall 24. In addition, a pair of leg openings 25 are provided in rear wall 14 for the child to stick his/her legs through.

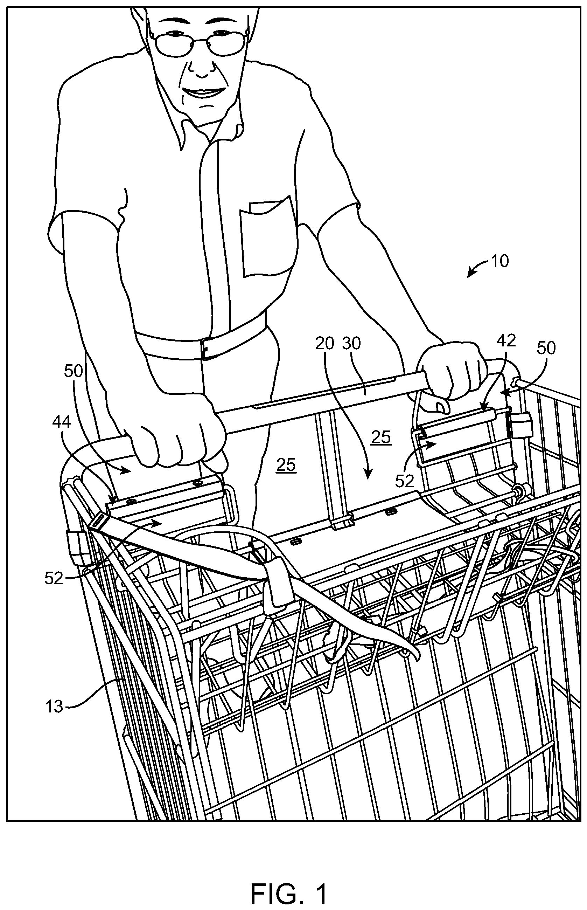

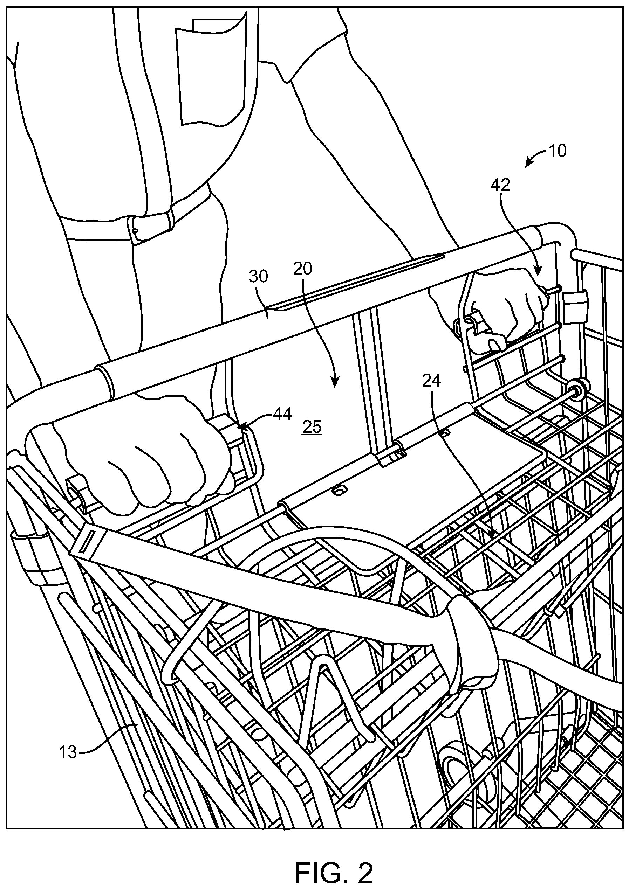

The present system includes a novel double handle system for comfort of users of different heights, as follows. As seen in Figs. 1 and 2, the upper rear handle 30 of the present shopping cart is shown. Upper rear handle 30 is a standard feature on many existing shopping cart frames. Upper rear handle 30 also preferably forms part of the rear wall 14 of shopping cart 10. As illustrated above, the upper rear handle 30 can be positioned at the top of rear wall 14, and the pair of lower rear handles 42 and 44 can be positioned in the plane of rear wall 14. In addition, the pair of lower rear handles 42 and 44 can preferably be positioned above a bottom 24 of the child's seat basket 20.

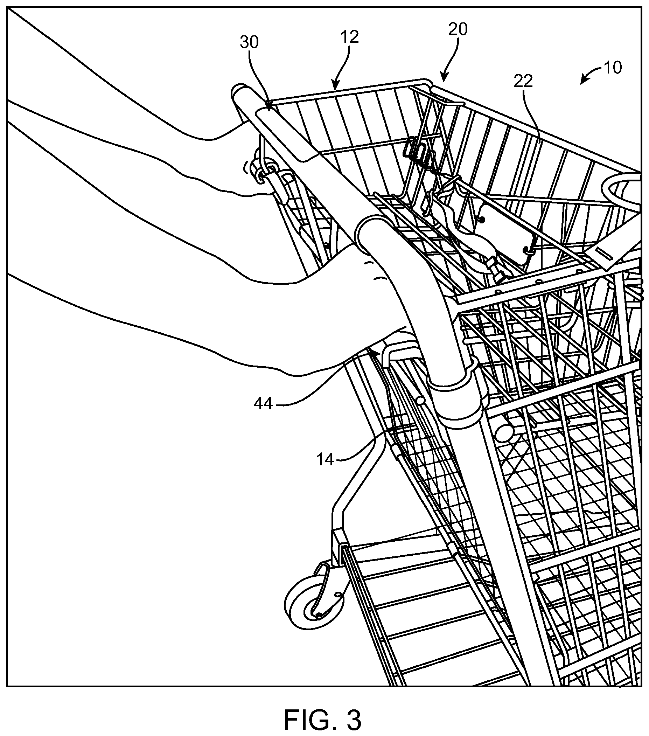

In accordance with the present system, a pair of lower rear handles 42 and 44 are also shown. As seen in Figs. 2 and 3, a shorter user may simply use lower handles 42 and 44 if this gripping height better suites them. As can be seen, the upper rear handle 30 is positioned above the child's seat basket 20 at a top rear of the shopping cart frame 10, and the pair of lower rear handles 42 and 44 are also attached to the shopping cart on either side of the child's leg openings 25.

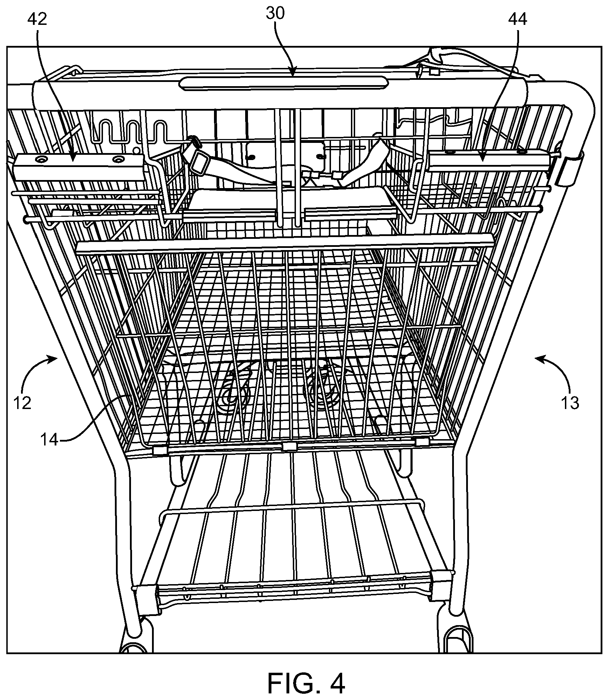

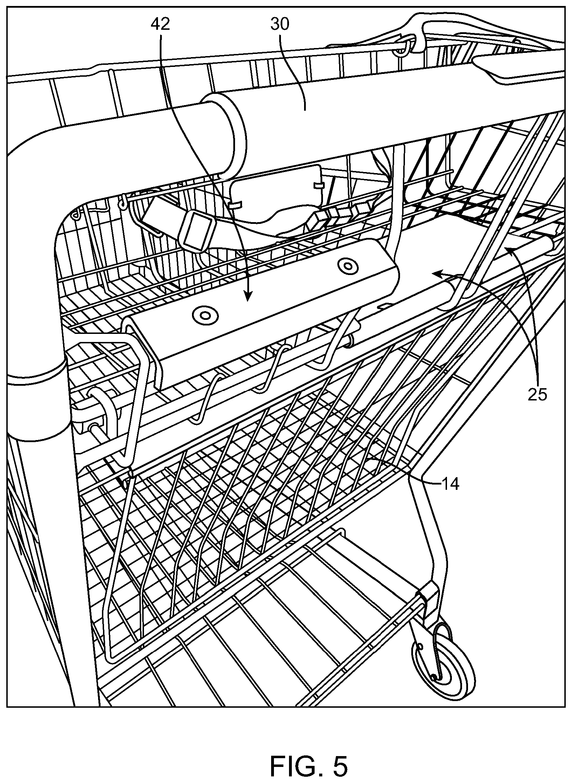

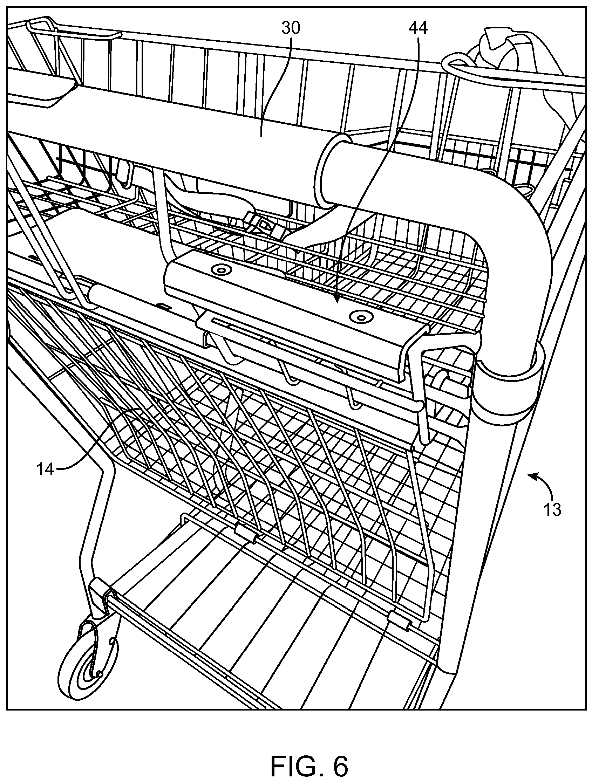

As seen in Figs. 4 through 6, the pair of lower rear handles 42 and 44 are positioned at opposite sides of the shopping cart 10, and on opposite sides of the child's seat basket 20 next to leg openings 25. Lower rear handles 42 and 44 are preferably connected to side supporting members in side walls 12 and 13 of the shopping cart 10.

As best seen in Figs. land 2, the pair of lower gripping handles 42 and 44 have openings 50 above and openings 52 below. As such, a user can wrap their fingers around the pair of lower rear handles 42 and 44 (as seen in Fig. 2), or openings 50 can receive a user's fingers therein when the user holds onto the upper gripping handle 30. As such, openings 50 can advantageously be used in either the upper or lower handle gripping positions. Openings 50 and 52 may simply be formed as openings in rear wall 14.

In preferred embodiments, each of the upper and lower rear handles 30 and 42/44 further comprise plastic gripping surfaces with flattened top edges for user comfort. The gripping surfaces can be made of other suitable materials, and into any shape as desired. It is to be understood that the present invention is not limited to either of these alternate embodiments, but is defined only by the claims.

## Claims

1. A double handle shopping cart system, comprising:
a shopping cart frame comprising a front wall (11), a left side wall (12), a right side wall (13), a rear wall (14), and a bottom wall (15);
a child's seat basket (20) at a top rear end of the shopping cart frame;
an upper rear handle (30) positioned above the child's seat basket (20) at the top of the rear wall (14); and
a pair of lower rear handles (42, 44) attached to the shopping cart frame,
**characterised in that** the pair of lower rear handles (42, 44) are positioned in the plane of the rear wall (14) below the upper rear handle (30).

2. The system of claim 1, wherein the pair of lower rear handles (42, 44) are positioned at opposite sides of the shopping cart frame.

3. The system of claim 1, wherein the pair of lower rear handles (42, 44) have openings above (50) and openings below (52) such that a user can wrap their fingers around the pair of lower rear handles (42, 44).

4. The system of claim 1, wherein openings (52) in the rear wall below each of the pair of lower rear handles (42, 44) are dimensioned to receive a user's fingers therein when the user holds onto the pair of lower rear handles (42, 44).

5. The system of claim 1, wherein openings (50) in the rear wall above each of the pair of lower rear handles (42, 44) are dimensioned to either:
receive a user's fingers therein when the user holds onto the upper rear handle (30), or
receive a user's hands therein when the user holds onto the pair of lower rear handles (42,
44).

6. The system of claim 1, wherein the child's seat basket (20) includes two leg openings (25) in the rear wall (14) of the shopping cart frame, and wherein the pair of lower rear handles (42, 44) are positioned on opposite sides of the two leg openings (25) of the child's seat basket (20).

7. The system of claim 1, wherein the pair of lower rear handles (42, 44) are positioned above a bottom (24) of the child's seat basket (20).

8. The system of claim 1, wherein each of the pair of lower rear handles (42, 44) are connected by wires to the upper rear handle (30).

9. The system of claim 1, wherein the pair of lower rear handles (42, 44) are connected to side supporting members of the shopping cart frame.

10. The system of claim 1, wherein any one of the upper (30) or lower (42, 44) rear handles further comprise plastic gripping surfaces.

11. The system of claim 10, wherein the plastic gripping surfaces have flattened top edges.

## Patentansprüche

1. Doppelgriffeinkaufswagensystem, umfassend:
einen Einkaufswagenrahmen, der eine Vorderwand (11), eine linke Seitenwand (12), eine rechte Seitenwand (13), eine Rückwand (14) und eine Bodenwand (15) umfasst;
einen Kindersitzkorb (20) an einem oberen rückseitigen Ende des Einkaufswagenrahmens;
einen oberen rückseitigen Griff (30), der oberhalb des Kindersitzkorbs (20) an der Oberseite der Rückwand (14) angeordnet ist; und
ein Paar von unteren rückseitigen Griffen (42, 44), die an dem Einkaufswagenrahmen befestigt sind,
**dadurch gekennzeichnet, dass** das Paar von unteren rückseitigen Griffen (42, 44) in der Ebene der Rückwand (14) unterhalb des oberen rückseitigen Griffs (30) angeordnet ist.

2. System nach Anspruch 1, wobei das Paar von unteren rückseitigen Griffen (42, 44) an entgegengesetzten Seiten des Einkaufswagenrahmens angeordnet ist.

3. System nach Anspruch 1, wobei das Paar von unteren rückseitigen Griffen (42, 44) obere Öffnungen (50) und untere Öffnungen (52) umfasst, sodass ein Benutzer das Paar von unteren rückseitigen Griffen (42, 44) mit den Fingern umgreifen kann.

4. System nach Anspruch 1, wobei Öffnungen (52) in der Rückwand unterhalb jedes aus dem Paar von unteren rückseitigen Griffen (42, 44) bemessen sind, um Finger eines Benutzers darin aufzunehmen, wenn der Benutzer das Paar von unteren rückseitigen Griffen (42, 44) festhält.

5. System nach Anspruch 1, wobei Öffnungen (50) in der Rückwand oberhalb jedes aus dem Paar von unteren rückseitigen Griffen (42, 44) bemessen sind, um entweder
Finger eines Benutzers darin aufzunehmen, wenn der Benutzer den oberen rückseitigen Griff (30) festhält, oder
Hände eines Benutzers darin aufzunehmen, wenn der Benutzer das Paar von unteren rückseitigen Griffen (42, 44) festhält.

6. System nach Anspruch 1, wobei der Kindersitzkorb (20) zwei Beinöffnungen (25) in der Rückwand (14) des Einkaufswagenrahmens umfasst, und wobei das Paar von unteren rückseitigen Griffen (42, 44) auf entgegengesetzten Seiten der zwei Beinöffnungen (25) des Kindersitzkorbs (20) angeordnet ist.

7. System nach Anspruch 1, wobei das Paar von unteren rückseitigen Griffen (42, 44) oberhalb eines Bodens (24) des Kindersitzkorbs (20) angeordnet ist.

8. System nach Anspruch 1, wobei jedes aus dem Paar von unteren rückseitigen Griffen (42, 44) durch Drähte mit dem oberen rückseitigen Griff (30) verbunden ist.

9. System nach Anspruch 1, wobei das Paar von unteren rückseitigen Griffen (42, 44) mit Seitenhalteelementen des Einkaufswagenrahmens verbunden ist.

10. System nach Anspruch 1, wobei einer aus dem oberen (30) oder dem unteren (42, 44) rückseitigen Griff ferner Kunststoff-Greifflächen umfasst.

11. System nach Anspruch 10, wobei die Kunststoff-Greifflächen abgeflachte Oberkanten aufweisen.

## Revendications

1. Système à double poignée pour chariot d'achat, comprenant :
un cadre de chariot d'achat comprenant une paroi avant (11), une paroi latérale gauche (12), une paroi latérale droite (13), une paroi arrière (14) et une paroi de fond (15) ;
un panier de siège d'enfant (20) au niveau d'une extrémité arrière supérieure du cadre de chariot d'achat ;
une poignée arrière supérieure (30) positionnée au-dessus du panier de siège d'enfant (20) au sommet de la paroi arrière (14) ; et
une paire de poignées arrière inférieures (42, 44) fixées au cadre de chariot d'achat,
**caractérisé en ce que** la paire de poignées arrière inférieures (42, 44) est positionnée dans le plan de la paroi arrière (14) en dessous de la poignée arrière supérieure (30).

2. Système selon la revendication 1, dans lequel la paire de poignées arrière inférieures (42, 44) sont positionnées sur des côtés opposés du cadre de chariot d'achat.

3. Système selon la revendication 1, dans lequel la paire de poignées arrière inférieures (42, 44) présentent des ouvertures de dessus (50) et des ouvertures de dessous (52) de sorte qu'un utilisateur peut enrouler ses doigts autour de la paire de poignées arrière inférieures (42, 44).

4. Système selon la revendication 1, dans lequel des ouvertures (52) dans la paroi arrière en dessous de chacune de la paire de poignées arrière inférieures (42, 44) sont dimensionnées pour recevoir les doigts d'un utilisateur en leur sein lorsque l'utilisateur tient la paire de poignées arrière inférieures (42, 44).

5. Système selon la revendication 1, dans lequel les ouvertures (50) dans la paroi arrière au-dessus de chacune de la paire de poignées arrière inférieures (42, 44) sont dimensionnées pour :
recevoir les doigts d'un utilisateur lorsque l'utilisateur tient la poignée arrière supérieure (30), ou
recevoir les mains d'un utilisateur lorsque l'utilisateur tient la paire de poignées arrière inférieures (42, 44).

6. Système selon la revendication 1, dans lequel le panier de siège d'enfant (20) comprend deux ouvertures de jambe (25) dans la paroi arrière (14) du cadre de chariot d'achat, et dans lequel la paire de poignées arrière inférieures (42, 44) sont positionnées sur des côtés opposés des deux ouvertures de jambe (25) du panier de siège d'enfant (20).

7. Système selon la revendication 1, dans lequel la paire de poignées arrière inférieures (42, 44) sont positionnées au-dessus d'un fond (24) du panier de siège d'enfant (20).

8. Système selon la revendication 1, dans lequel chacune de la paire de poignées arrière inférieures (42, 44) sont reliées par des fils à la poignée arrière supérieure (30).

9. Système selon la revendication 1, dans lequel la paire de poignées arrière inférieures (42, 44) sont reliées à des éléments de support latéraux du cadre de chariot d'achat.

10. Système selon la revendication 1, dans lequel l'une quelconque des poignées arrière supérieure (30) ou inférieures (42, 44) comprend en outre des surfaces de préhension en plastique.

11. Système selon la revendication 10, dans lequel les surfaces de préhension en plastique présentent des bords supérieurs aplatis.
